# EUROPEAN PATENT SPECIFICATION

(11) **EP 0 404 603 B1**
(45) Date of publication and mention of the grant of the patent: **23.03.1994**
(21) Application number: 90306930.0
(22) Date of filing: 25.06.1990
(51) Int. Cl.: A47J 31/40, A47J 31/32

(54) **Beverage preparation apparatus for vending machines**
Vorrichtung zur Herstellung von Getränken für Verkaufsautomat
Dispositif de préparation de boissons pour automate de vente

(30) Priority: 23.06.1989 JP 161902/89
(43) Date of publication of application: 27.12.1990
(73) Proprietor: SANDEN CORPORATION, Isesaki-shi Gunma, 372 (JP)
(72) Inventor: Takayanagi, Yasushi, c/o Sanden Corporation, Isesaki-shi, Gunma 372 (JP); Sekiguchi, Ryoichi, c/o Sanden Corporation, Isesaki-shi, Gunma 372 (JP)
(74) Representative: Stuart, Ian Alexander

(56) References cited:
- JP-A-62 182 897

## Description

The present invention relates to a beverage preparation apparatus for vending machines which mixes water and raw material of a beverage and filters the liquid mixture.

A conventional beverage preparation apparatus for vending machines is shown in Figures 1 and 2 ( Japanese Patent Publication SHO 62-182897). A liquid mixture of water, for example hot water, and the raw material of a beverage, for example a powder, is introduced into cylinder 1 through inflow port 1a. When valve 2 opens the inflow port 1a, bottom opening 1b is closed by filter 4 moved vertically together with filter support 5 which is urged downwardly by return spring 5a which also provides for the opening and closing of bottom opening 1b. Once the liquid mixture is stored in cylinder 1, valve 2 is closed and pressurized air is supplied into the cylinder from pressurized air generating means 3. Liquid mixture stored in cylinder 1 is forcibly filtered and extracted by the pressure of the supplied pressurized air via filter 4.

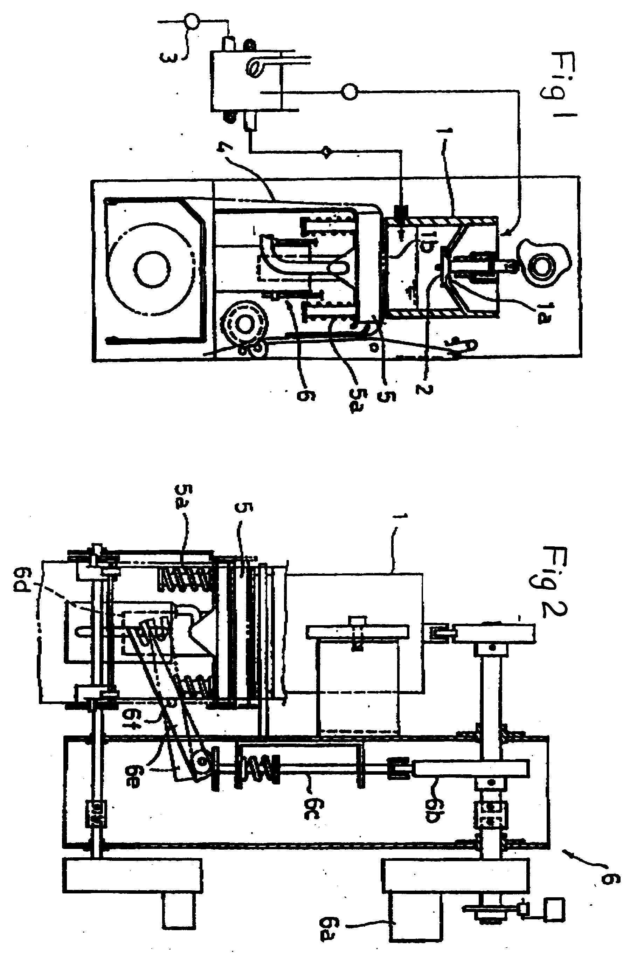

Filter support drive mechanism 6 is constructed, for example, as shown in Figure 2. Cam 6b is driven (rotated) by motor 6a, driving force transmitting mechanism 6c is moved vertically by rotated cam 6b, and lever 6e pivotably supported at position 6f is rotated between the positions illustrated by the continuous line and the dashed line in Figure 2 by engaging the bottom portion of driving force transmitting mechanism 6c with one end portion of lever 6e. The other end portion of lever 6e engages lifting frame 6d attached to filter support 5. When lever 6e is rotated clockwise from the position shown by the continuous line to the position shown by the dashed line, filter support 5 is moved up together with lifting frame 6d, and bottom opening 1b of cylinder 1 is closed by filter support 5 and filter 4 as shown in Figure 1.

In the above beverage preparation apparatus after the liquid mixture stored in cylinder 1 is forcibly filtered and extracted via filter 4, valve 2 opens inflow port 1a, and the pressure 1b is released. With respect to the above order of the operation, if bottom opening 1b is opened before valve 2 opens inflow port 1a, since the pressure in cylinder 1 is very high relative to atmosphere, the dregs of the raw material on filter 4 and the liquid mixture left in cylinder 1 are scattered by the high pressure in cylinder 1 in the inside of the vending machine through a gap between cylinder 1 and filter 4. That is why the above order is predetermined.

However, in the construction of the above beverage extracting mechanism, the opening of inflow port 1a is formed relatively large to introduce the hot water and the raw material of the beverage into cylinder 1 as soon as possible. Accordingly, the diameter of valve 2 is necessary to be also large to be adapted to inflow port 1a. Valve 2 is upwardly urged by the high pressure in cylinder 1. As a result, it is necessary for a large driving force to be applied to valve 2 to open inflow port 1a, and a large size of a valve driving mechanism is needed. In addition, when valve 2 opens inflow port 1a, hot water remaining on the surface of valve 2 is scattered outside through inflow port 1a, and the hot water may adhere on the outlet of a conduit for introducing the raw material.

It would be desirable to provide a beverage preparation apparatus for a vending machine which can use a relatively small size of a valve driving mechanism.

It would be desirable to provide a beverage preparation apparatus for a vending machine which can prevent liquid mixture from being scattered in the inside of a vending machine.

A beverage preparation apparatus for vending machines according to the present invention includes a mixing hopper which is connected to an inflow port. Water and a raw material of a beverage are introduced into the mixing hopper from outside. A cylinder has the inflow port on its upper portion and an opening on its bottom portion. A liquid mixture of water and a raw material of a beverage is introduced into the cylinder from the mixing hopper through the inflow port. A valve mechanism is disposed for opening and closing the inflow port of the cylinder. A filter covers the bottom opening of the cylinder. A filter support supports the filter from the lower end of the filter. The filter support opens and closes the bottom opening of the cylinder by vertically moving the filter. A pressurization mechanism supplies pressurized air into the cylinder through an air path when the inflow port is closed by the valve mechanism and the bottom opening is closed by the filter to forcibly filter the liquid mixture stored in the cylinder through the filter. A cylindrical valve support is fixedly disposed in the cylindrical mixing hopper and extends to the inflow port. The valve mechanism includes a tubular main valve shaft which extends to the inside of the cylinder through the cylindrical valve support and which has a main valve at its bottom end for opening and closing the inflow port. An auxiliary valve shaft extends to the inside of the cylinder through the cylindrical main valve shaft with a certain gap between the inner surface of the main valve shaft and the outer surface thereof. An auxiliary valve is fixedly disposed on the auxiliary valve shaft for opening and closing the opening of the main valve shaft at its lower end and is connected to a driving source at its head portion Urging means is disposed for urging the auxiliary valve shaft upward to have the auxiliary valve close the opening of the main valve shaft.

Further objects, features and other aspects of this invention will be understood from the following detailed description of the preferred embodiment of this invention with reference to the attached drawings , wherein:
Figure 1 is an elevational view of a conventional beverage extracting apparatus ;
Figure 2 is an enlarged side view of a beverage extracting apparatus as shown in Figure 1;
Figure 3 is a schematic view of a vending machine including a beverage preparation apparatus in accordance with one embodiment of this invention; and
Figure 4 is a cross-sectional view of a main portion of a beverage preparation apparatus as shown in Figure 3.

### DETAILED DESCRIPTION OF THE PREFERRED EMBODIMENTS

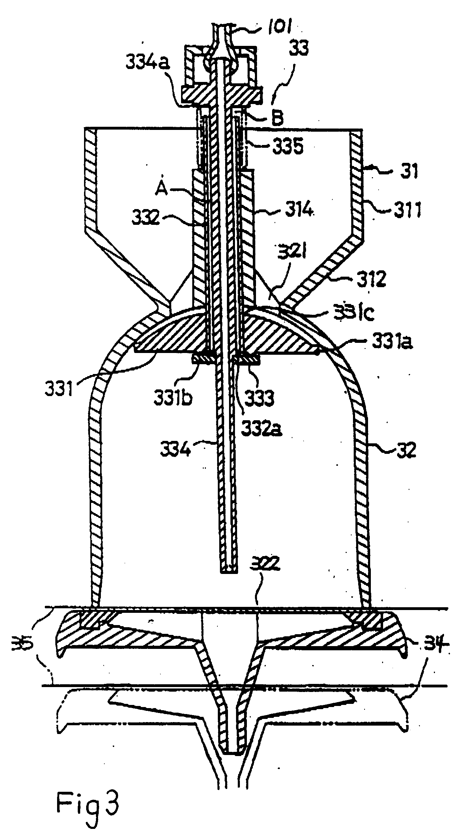

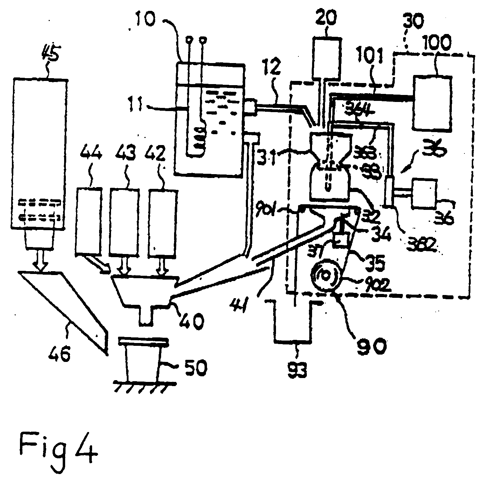

Referring to the drawings, Figures 3 and 4 illustrate a beverage preparation apparatus for vending machines according to to one embodiment of this invention.

Figure 3 shows a schematic structure of a vending machine selling a beverage, for example, coffee. Hot water store tank 10 stores hot water heated by heater 11. Raw material bin 20 stores the raw material of the beverage, for example, coffee powder. Beverage preparation apparatus 30 mixes and stirs the hot water supplied from hot water storage tank 10 through hot water supply pipe 12 and the raw powder supplied from raw material bin or mill 20, and extracts a liquid for the beverage (for example, coffee) from the liquid mixture of the hot water and the raw powder. The extracted liquid is sent to mixing bin 40 through extracted liquid delivering pipe 41, and in this embodiment, after the sugar from sugar bin 42 and the cream from cream bin 43 are added to the liquid in the mixing bin, the liquid is poured into cup 50 as a beverage to be sold. Cup 50 is sent from cup storing and delivering device 45 through cup chute 46. In this embodiment, coffee bin 44 for storing an instant coffee is also provided in the vending machine.

Figure 4 shows a main portion of a beverage extracting apparatus 30 as shown in Figure 3.

Mixing hopper 31 made of heat-proof plastic includes cylindrical side portion 311 and frustoconical bottom portion 312 integrally formed therewith. The bottom portion 312 is formed in alignment with cylindrical portion 311 so that its diameter becomes gradually small from the connecting portion with cylindrical side portion 311 downward. Cylindrical valve support 314 is fixed at the lower end portion of the hopper bottom portion 312 and is positioned at the center of mixing hopper 31 to extend vertically. Cylinder 32 has inflow port 321 opened and closed by valve mechanism 33 on the upper portion thereof and opening 322 on the bottom portion thereof. Cylinder 32 is formed integrally with mixing hopper 31 at its upper end to communicate with mixing hopper 31 through inflow port 321. The inner surface of cylinder 32 at its upper end is formed in spherical shape.

Valve mechanism 33 includes main valve 331 to open and close inflow port 321, main valve shaft 332 to move main valve 331 vertically, auxiliary valve 333, auxiliary valve shaft 334 to move auxilary valve 333 vertically, and coil spring 335.

Main valve 331 is made of rubber and is formed in semi-spherical shape in cross-section. Flange portion 331a is formed on the outer circumferential surface of main valve 331 to improve sealing between mixing hopper 31 and cylinder 32. Valve seat 331b is formed annularly on the bottom end of main valve 331 to receive auxiliary valve 333.

Main valve shaft 332 is formed in tubular shape and extends through the interior of cylindrical valve support 314. The upper end of main valve shaft 332 reaches the atmosphere. The lower end thereof extends through hole 331c of main valve 331 to its bottom end and is fixed to main valve 331.

Auxiliary valve 333 is made of stainless plate and is formed in disc-shape. The outer diameter of auxiliary valve 333 is less than that of main valve 331 to prevent the high pressure in cylinder 32 from being largely added thereto.

Auxiliary valve shaft 334 extends through the interior of main valve shaft 332 with a certain gap A therebetween (about 1-2mm) and has head portion 334a at its upper end to project in radial direction. Head portion 334a is positioned to contact the upper end of main valve shaft 332 when auxiliary valve shaft 334 moves downward. The lower end of auxiliary valve shaft 334 extends to the lower portion of cylinder 32 and auxiliary valve 333 is fixed on auxiliary valve shaft 334 on its way.

Coil spring 335 is disposed between the upper end of cylindrical valve support 314 and the lower end of head portion 334a of auxiliary valve shaft 334. Coil spring 335 urges auxiliary valve shaft 334 upward so that a gap between the lower end of head portion 334a and the upper end of main valve shaft 322 is a certain gap B (about 4-5mm). Auxiliary valve 333 fixed on auxiliary valve shaft 334 moves upward together with auxiliary valve shaft 334, and is urged toward valve seat 331b of main valve 331. Opening 332a on the lower end of main valve shaft 332 is thus closed by auxiliary valve 333.

Valve driving mechanism 36 is connected to head portion 334a of auxiliary valve shaft 334 and has drive motor 361, cam 362 attached to the output of drive motor 341 and cam shaft 363. Cam shaft 363 pivotably supported at its central portion by pin 364 is rotated by the vertical motion caused by the rotation of cam 362. Main valve shaft 332 and auxiliary valve shaft 334 are moved upward and downward in accordance with vertical motion of cam shaft 363.

Pressure feeder 100, e.g., an air pump, is coupled with auxiliary valve shaft 334 through air pipe 101, which is made of elastic plastic and supplies the interior of cylinder 32 with pressurized air through air pipe 101 and auxiliary valve shaft 334.

Bottom opening 322 of cylinder 32 is covered by filter 35 and is opened and closed by vertical motion of filter support 34 disposed below the bottom opening. Filter support 34 is connected to extracted liquid delivering pipe 41, and the liquid filtered by filter 35 is extracted through filter support 34 and extracted liquid delivering pipe 41 into mixing bin 40 as shown in Figure 3. Filter 35 is sent onto filter support 34 through rollers 901 from filter role 902 by filter feeding mechanism 90. The vertical motion of filter support 34 is caused by motion of solenoid 37 disposed below the filter support.

The process of extracting coffee is described in the following.

Hot water and ground coffee are introduced from hot water storage tank 10 and mill 20 to the upper portion of mixing hopper 31, respectively. Mixing hopper 31 mixes the hot water and the powder, and forms the liquid mixture of the hot water and the powder.

Filter support 34 is moved upward by energizing solenoid 37, and filter 35 closes opening 322 on the bottom portion of cylinder 32. Drive motor 301 is energized, and cam 362 rotates. Cam shaft 363 is rotated anti-clockwise around pin 364 by vertical motion caused by the rotation of cam 362. Accordingly, auxiliary valve shaft 334 goes down against the recoil strength of coil spring 335, and auxiliary valve 333 opens opening 332a on the lower end of main valve shaft 332. Auxiliary valve shaft 334 further goes down, and moves main valve shaft 332 downward. Main valve 331 also moves downward together with main valve shaft 332, and main valve 331 opens inflow port 321. The liquid mixture in mixing hopper 31 is thus introduced into cylinder 32.

Pressurized air with bubbles is supplied from air pump 100 into the liquid mixture in cylinder 32 through air pipe 101 and auxiliary valve shaft 334. The liquid mixture is uniform by stirring caused by supplying pressurized air.

After starting to stir, drive motor 361 is energized again and cam 362 rotates further. Auxiliary valve shaft 334 is urged upward by the restoring strength of coil spring 335, and auxiliary valve 333 closes opening 332a on the lower end of main valve shaft 332. Auxiliary valve shaft 334 is further moved upward together with auxiliary valve 333, and main valve 331 is moved upward together with main valve shaft 332 by vertical motion of auxiliary valve 333. Accordingly, main valve 331 closes inflow port 321, and the communication between mixing hopper 31 and cylinder 32 is prevented.

Since pressurized air is continuously supplied to cylinder 32, the pressure in cylinder 32 increases, and the liquid mixture is forcibly filtered through filter 35. The coffee is extracted through filter support 34 and sent to mixing bin 40 through extracted liquid delivery pipe 41. Coffee is thereafter mixed with milk and/or sugar therein and poured into cup 50.

The process of dumping the raw powder after extracting is described in the follows.

Drive motor 361 is energized, and cam 362 rotates. Auxiliary valve shaft 334 is moved downward against the recoil strength of coil spring 335 by vertical motion of cam shaft 363. Auxiliary valve 333 opens opening 332a on the lower end of main valve shaft 332. Accordingly, the high pressure air in cylinder 32 is exhausted outside thereof through gap A between the inner surface of main valve shaft 332 and the outer surface of auxiliary valve shaft 334, and the pressure of the air in cylinder 32 is reduced.

When auxiliary valve 333 opens opening 332a, since the diameter of auxiliary valve 333 is small, the high pressure of the air in cylinder 32 does not greatly affect auxiliary valve 333. Accordingly, auxiliary valve 333 can be easily detached from opening 332a by small driving force. In addition, since auxiliary valve 333 is made of stainless, auxiliary valve 333 is not transformed or connected to opening 332a by the high pressure of the air in cylinder 32. Accordingly, auxiliary valve 333 has high ability for response to the driving force from drive motor 361. Furthermore, since opening 332a on the lower end of main valve 332 and auxiliary valve 333 are positioned to be away from the liquid mixture left on the inner surface of cylinder 32 after extracting, its liquid mixture is not scattered with high pressure air outside through gap A. Therefore, the outlet port of mill 20 can be maintained to be dry, and its outlet is not obstructed with the raw powder.

Drive motor 361 is continuously energized, and main valve shaft 332 is moved downward together with main valve 331 by vertical motion of auxiliary valve shaft 334. Main valve 331 thus opens inflow port 321. At this moment, the pressure in cylinder 32 has already been reduced, and the liquid mixture left in cylinder 32 is not scattered.

Then, filter support 34 is disconnected to opening 322 on the bottom end portion of cylinder 32 by a coil spring (not shown). Fresh filter 35 is supplied onto filter support 34 by filter feeding mechanism 90.

This invention has been described in detail in connection with the preferred embodiment but of course the invention is not restricted thereto.

## Claims

1. Beverage preparation apparatus for vending machines including:
mixing hopper mean (31) connected to an inflow port (321), into which, in use, water and a raw material of a beverage are introduced from outside;
a cylinder (32) having the inflow port (321) on its upper portion and an opening (322) on its bottom portion, into which a liquid mixture of water and a raw material of a beverage is introducible through the inflow port (321);
valve means (331-334) for opening and closing said inflow port (321) of said cylinder (32);
filter means (35) for covering said bottom opening of said cylinder;
filter support means (34) for supporting said filter means (35) from the lower side of said filter means, the filter support means opening and closing said bottom opening of said cylinder by vertically moving said filter means; and
pressurization means (100) for supplying pressurized air into said cylinder (32) through an air path when said inflow port (321) is closed by said valve means (331) and said bottom opening is closed by said filter means (35) to forcibly filter the liquid mixture stored in said cylinder (32) through said filter means (35);
characterised in that there are:
a cylindrical valve support (314) fixedly disposed in said mixing hopper means (31) and extending to said inflow port (321);
said valve means including a tubular main valve shaft (332) extending to the inside of said cylinder (32) through said cylindrical valve support (314) and having a main valve (331) at its bottom end for opening and closing said inflow port (321);
an auxiliary valve shaft (334) extending to the inside of said cylinder (32) through said tubular main valve shaft (332) with a certain gap (A) between its outer surface and the inner surface of said main valve shaft (332);
an auxiliary valve (333) fixedly disposed on said auxiliary valve shaft (334) at its lower end for opening and closing the opening of said tubular main valve shaft (332);
driving means for urging displacement of said auxiliary valve shaft (334); and
urging means (335) acting between the auxiliary valve shaft (334) and the upper end of said cylindrical main valve support (314) for urging said auxiliary valve shaft (334) upward to urge said auxiliary valve (333) to close the opening of said main valve shaft (332).

2. The apparatus of claim 1 wherein said auxiliary valve (333) has a diameter less than that of said main valve (331).

3. The apparatus of claim 1 or claim 2 wherein said main valve (331) has a flange portion (331a) on its outer circumference for sealing to the cylinder (32).

4. The apparatus of any of claims 1-3 wherein said main valve (331) has an annular projection (331b) on its bottom end surface to receive said auxiliary valve (333).

5. The apparatus of any of claims 1-4 wherein said auxiliary valve is made of metal.

6. The apparatus of any of claims 1-5 wherein said auxiliary valve is made of stainless steel.

## Patentansprüche

1. Getränkezubereitungsvorrichtung für Verkaufsautomaten, umfassend:
eine Mischtrichtereinrichtung (31), die an eine Einströmöffnung (321) angeschlossen ist, in die bei der Verwendung Wasser und ein Rohmaterial für ein Getränk von außen eingebracht werden;
einen Zylinder (32) mit der Einströmöffnung (321) an seinem oberen Abschnitt und einer Öffnung (322) in seinem Bodenabschnitt, in den eine flüssige Mischung aus Wasser und einem Rohmaterial für ein Getränk durch die Einströmöffnung (321) einbringbar ist,
eine Ventileinrichtung (331-334) zum Öffnen und Schließen der genannten Einströmöffnung (321) des genannten Zylinders (32);
eine Filtereinrichtung (35) zum Bedecken der genannten Bodenöffnung des genannten Zylinders;
eine Filtertrageeinrichtung (34) zum Stützen der genannten Filtereinrichtung (35) von der Unterseite der genannten Filtereinrichtung, wobei die Filtertrageeinrichtung die genannte Bodenöffnung des genannten Zylinders öffnet und schließt, indem sie die genannte Filtereinrichtung vertikal bewegt; und
eine Druckbeaufschlagungseinrichtung (100) zum Zuführen von Druckluft in den genannten Zylinder (32) durch einen Luftweg, wenn die genannte Einströmöffnung (321) durch die genannte Ventileinrichtung (331) geschlossen wird und die genannte Bodenöffnung durch die genannte Filtereinrichtung (35) geschlossen wird, um die im genannten Zylinder (32) gespeicherte flüssige Mischung zwangsweise durch die genannte Filtereinrichtung (35) zu filtrieren;
dadurch gekennzeichnet, daß vorhanden sind:
ein zylindrischer Ventilträger (314), der fix in der genannten Mischtrichtereinrichtung (31) angebracht ist und sich in die genannte Einströmöffnung (321) erstreckt;
wobei die genannte Ventileinrichtung einen röhrenförmigen Hauptventilschaft (332) enthält, der sich durch den genannten zylindrischen Ventilträger (314) in das Innere des genannten Zylinders (32) erstreckt und zum Öffnen und Schließen der genannten Einströmöffnung (321) ein Hauptventil (331) an seinem unteren Ende aufweist;
ein Hilfsventilschaft (334), der sich durch den genannten röhrenförmigen Hauptventilschaft (332) zum Inneren des genannten Zylinders (32) erstreckt, wobei ein gewisser Spalt (A) zwischen seiner Außenfläche und der Innenfläche des genannten Hauptventilschafts (332) vorhanden ist;
ein Hilfsventil (333), das fix am unteren Ende des Hilfsventilschafts (334) angebracht ist, um die Öffnung des genannten röhrenförmigen Hauptventilschafts (332) zu öffnen und zu schließen;
eine Antriebseinrichtung zum Wegdrängen des genannten Hilfsventilschafts (334); und
eine Drängeinrichtung (335), die zwischen dem Hilfsventilschaft (334) und dem oberen Ende des genannten zylindrischen Hauptventilträgers (314) wirkt, um den genannten Hilfsventilschaft (334) nach oben zu drängen, um das genannte Hilfsventil (333) dazu zu drängen, die Öffnung des genannten Hauptventilschafts (332) zu schließen.

2. Vorrichtung nach Anspruch 1, worin das genannte Hilfsventil (333) einen geringeren Durchmesser als das genannte Hauptventil (331) aufweist.

3. Vorrichtung nach Anspruch 1 oder 2, worin das genannte Hauptventil (331) einen Flanschabschnitt (331a) an seinem äußeren Umfang zum Abdichten des genannten Zylinders (32) aufweist.

4. Vorrichtung nach einem der Ansprüche 1 bis 3, worin das genannte Hauptventil (331) einen ringförmigen Vorsprung (331b) an seiner Fläche am unteren Ende aufweist, um das genannte Hilfsventil (333) aufzunehmen.

5. Vorrichtung nach einem der Ansprüche 1 bis 4, worin das genannte Hilfsventil aus Metall besteht.

6. Vorrichtung nach einem der Ansprüche 1 bis 5, worin das genannte Hilfsventil aus rostfreiem Stahl besteht.

## Revendications

1. Appareil de préparation de boissons pour des automates de vente, comprenant :
un moyen formant trémie de mélange (31) connecté à un orifice d'entrée (321), dans lequel, en cours d'utilisation, on introduit de l'eau et une matière brute de boisson depuis l'extérieur;
un cylindre (32) possédant l'orifice d'entrée (321) sur sa portion supérieure et une ouverture (322) à sa portion de fond, dans lequel un mélange liquide constitué d'eau et de matière brute d'une boisson peut être introduit à travers l'orifice d'entrée (321);
des moyens formant vanne (331-334) pour ouvrir et fermer ledit orifice d'entrée (321) dudit cylindre (32);
un moyen de filtre (35) pour couvrir ladite ouverture de fond dudit cylindre;
un moyen de support de filtre (34) pour supporter ledit moyen de filtre (35) depuis le côté inférieur dudit moyen de filtre, le moyen de support de filtre ouvrant et fermant ladite ouverture de fond dudit cylindre en déplaçant verticalement ledit moyen de filtre; et
un moyen de mise en pression (100) pour fournir de l'air sous pression dans ledit cylindre (32) à travers un trajet d'air lorsque ledit orifice d'entrée (321) est fermé par ledit moyen de vanne (331) et que ladite ouverture de fond est fermée par ledit moyen de filtre (35) pour filtrer de force le mélange liquide stocké dans ledit cylindre (32) à travers ledit moyen de filtre (35);
caractérisé en ce que sont prévus :
un support cylindrique de vanne (314) disposé fixement dans ledit moyen de trémie de mélange (31) et s'étendant audit orifice d'entrée (321);
ledit moyen de vanne incluant une tige de vanne principale tubulaire (332) s'étendant vers l'intérieur dudit cylindre (32) à travers ledit support cylindrique de vanne (314) et possédant une vanne principale (331) à son extrémité de fond pour ouvrir et fermer ledit orifice d'entrée (321);
une tige de vanne auxiliaire (334) s'étendant vers l'intérieur dudit cylindre (32) à travers ladite tige de vanne principale tubulaire (332) avec un certain espace (A) entre sa surface extérieure et la surface intérieure de ladite tige de vanne principale (332);
une vanne auxiliaire (333) disposée fixement sur ladite tige de vanne auxiliaire (334) à son extrémité inférieure pour ouvrir et fermer l'ouverture de ladite tige de vanne principale tubulaire (332);
un moyen d'entraînement pour solliciter le déplacement de ladite tige de vanne auxiliaire (334); et
un moyen de sollicitation (335) agissant entre la tige de vanne auxiliaire (334) et l'extrémité supérieure dudit support de vanne principale cylindrique (314) pour solliciter ladite tige de vanne auxiliaire (334) vers le haut afin d'amener ladite vanne auxiliaire (333) à fermer l'ouverture de ladite tige de vanne principale (332).

2. Appareil selon la revendication 1, dans lequel ladite vanne auxiliaire (333) possède un diamètre inférieur à celui de ladite vanne principale (331).

3. Appareil selon la revendication 1 ou la revendication 2, dans lequel ladite vanne principale (331) possède une portion d'épaulement (331a) sur sa circonférence extérieure en vue d'une étanchéité relativement au cylindre (32).

4. Appareil selon l'une des revendications 1 à 3, dans lequel ladite vanne principale (331) possède une saillie annulaire (331b) sur sa surface d'extrémité de fond afin de recevoir ladite vanne auxiliaire (333).

5. Appareil selon l'une des revendications 1 à 4, dans lequel ladite vanne auxiliaire est réalisée en métal.

6. Appareil selon l'une des revendications 1 à 5, dans lequel ladite vanne auxiliaire est réalisée en acier inoxydable.
